# EUROPÄISCHE PATENTSCHRIFT

(11) **EP 0 814 904 B1**
(45) Veröffentlichungstag und Bekanntmachung des Hinweises auf die Patenterteilung: **25.07.2001**
(21) Anmeldenummer: 96905708.2
(22) Anmeldetag: 11.03.1996
(51) Int. Cl.: B01J 21/06, B01J 35/10

(54) **Verfahren ZUR UMSETZUNG VON mindestens einer IN EINEM GASGEMISCH ENTHALTENEN VERBINDUNGEN ausgewählt aus Kohlenmonoxid und halogenierten Kohlenwasserstoffen**
Process for the conversion of at least one of a COMPOUND IN A GAS MIXTURE selected from carbon monoxide and halogenated hydrocarbons
Procede de conversion au moins d'une composé, selectioné parmi du monoxyde de carbon des hydrocarbures halogénés, CONTENUS DANS UN MELANGE GAZEUX

(30) Priorität: 17.03.1995 DE 19509893
(43) Veröffentlichungstag der Anmeldung: 07.01.1998
(73) Patentinhaber: SIEMENS AKTIENGESELLSCHAFT, 80333 München (DE)
(72) Erfinder: LANDGRAF, Norbert, D-90607 Rückersdorf (DE); HUMS, Erich, D-91093 Hessdorf (DE)
(86) Internationale Anmeldenummer: DE9600431
(87) Internationale Veröffentlichungsnummer: WO9629147

(56) Entgegenhaltungen:
- EP-A- 0 264 747
- EP-A- 0 290 947
- EP-A- 0 394 677
- EP-A- 0 453 674
- DE-A- 2 401 160
- DE-A- 3 804 722

## Beschreibung

VerFahren zur Umsetzung von in einem Gasgemisch enthaltenen organischen Verbindungen

Die Erfindung bezieht sich auf ein VerFahren zur Umsetzung von mindestens einer in einem Gasgemisch enthaltenen Verbindung aus der Gruppe, welche besteht aus Kohlenmonoxid sowie halogenierten Kohlenwasserstoffen, wobei das Gasgemisch über einen Katalysator geleitet wird, welcher Titanoxid Vanadiumpentoxid und mindestens eine weitere katalytisch aktive Komponente umfasst. Unter organischen Verbindungen werden im allgemeinen Kohlenwasserstoffe, Lösungsmittel, Kohlenmonoxid, zyklische und aromatische Verbindungen sowie halogenierte Kohlenwasserstoffe, insbesondere Dioxine und Furane, verstanden. Solche Gasgemische können beispielsweise Automobilabgase, Industrieabluft, Abgase von stationären Verbrennungsmotoren und Rauchgase von Verbrennungsanlagen, wie z. B. Kraftwerke und Müllverbrennungsanlagen, sein.

Aus der DE-OS-38 04 722 sind ein Verfahren und ein Katalysator zur Beseitigung von organischen Verbindungen aus einem Abgas bekannt. Bezüglich des Verfahrens ist es offenbart, daß das Abgas mit der organischen Verbindung und zusammen mit Sauerstoff, insbesondere zusammen mit Luft, innerhalb eines vorgegebenen Temperaturbereichs, beispielsweise 250 bis 500 °C, einem selektiven Katalysator zugeführt wird, der die organische Verbindung zu umweltverträglichen Reaktionsprodukten, wie Kohlendioxid und Wasserdampf, umsetzt. Die Säurebeständigkeit wirkt sich gerade beim Dioxin/Furan-Abbau (Bildung von HCl, HF) vorteilhaft aus. Ein hierbei bevorzugter Katalysator ist ein aus einer Mischung von Oxiden bestehender Katalysator. Der hier betrachtete Katalysator besteht zu einem großen Gewichtsanteil aus Titandioxid, und zwar bevorzugt in der kristallinen Form des Anatas-Typs. Als katalytisch besonders aktive Komponenten sind dem Titandioxid Verbindungen und/oder Oxide und/oder Mischoxide der Ubergangsmetalle Chrom, Mangan, Kobalt, Nickel, Kupfer, Vanadium, Zink, Molybdän und Wolfram, bevorzugt aber auch Chromoxid, beigegeben.

Des weiteren ist aus der EP 0 290 947 B1 ein Katalysator zur Oxidation von Ammoniak (NH₃) bekannt. Auch dieser Katalysator besteht zu einem erheblichen Gewichtsanteil von bis zu 50 % aus Titandioxid, welches bevorzugt in der kristallinen Modifikation des Anatas vorliegen sollte. Die Anatas-Modifikation weist nämlich üblicherweise eine höhere BET-Oberfläche als die Rutil-Modi-fikation auf. Ein derartiger Katalysator besitzt aufgrund der hohen BET-Oberfläche eine große katalytische Aktivität.

Aus der DE 38 04 722 A1 oder der EP 0 290 947 B1 ist ein Verfahren zur Herstellung eines derartigen Katalysators zum Abbau von organischen Verbindungen bekannt. Dabei wird Titandioxid mit den aktiven Komponenten gemahlen, innig gemischt und gefiltert. Dem entstehenden Filterkuchen wird ein Bindemittel zugegeben, die entstehende Masse vermischt und in eine vorgegebene Form gebracht, z.B. auf Platten aufgetragen oder in Waben oder Pellets extrudiert. Anschließend wird die geformte Masse getrocknet und einer Wärmebehandlung unterzogen bzw. calciniert.

Die mit einem derartigen Katalysator durchgeführte Reaktion ist exotherm, deshalb kann es durch die Reaktion zu örtlichen Überhitzungen, sogenannten hot spots, bei dem Katalysator kommen. Weil der Katalysator überwiegend aus Titandioxid des Anatas-Typs besteht, verringert sich bedingt durch diese örtlichen Überhitzungen die spezifische Katalysatoroberfläche irreversibel, weil Titandioxid des Anatas-Typs unter Veränderung der Korngröße in den Rutil-Typ umgewandelt wird. Dies hat zur Folge, daß sich die Aktivität des Katalysators mit zunehmender Betriebsdauer verschlechtert.

Alternativ zu Titandioxid als Katalysatorgrundstoff ist es auch bekannt, einen Katalysator auf der Basis von Aluminiumoxid zusammenzusetzen. Ein solcher aluminiumoxidhaltiger Katalysator ist nur wenig anfällig für Temperaturbelastungen, insbesondere für örtliche Überhitzungen. Beim Einsatz eines solchen Katalysators hat es sich jedoch gezeigt, daß der Katalysator im Gegensatz zu Titandioxid-Katalysatoren mit der gebräuchlichen Anatas-Modifikation keine ausreichende Säurebeständigkeit, insbesondere beim Abbau halogenierter Kohlenwasserstoffe, besitzt.

Desweiteren ist aus der EP 0 264 747 A1 ein V₂O₅-TiO₂-Katalysator zur Umsetzung von o-Xylol bekannt, bei welchem das Titanoxid in der Rutilform vorliegt. Ferner ist aus der DE-OS 24 01 160 ein V₂O₅-TiO₂-Katalysator für die Gasphasenexodation von Buten zu Essigsäure bekannt, wobei mehr als 50% des Titandioxids in Rutilform vorliegen.

Weiter ist aus der EP 0 453 674 A1 ein Katalysator für die Fischer-Tropsch-Synthese bekannt, der aus Kobalt auf einem Träger besteht. Als Trägermaterial wird vorzugsweise TiO₂ verwendet, das Verhältnis von Rutil zu Anatas soll zwischen 4 :1 und 100 : 1 betragen. Als Oberfläche für den Träger sind 51 m²/g angegeben.

Der Erfindung liegt die Aufgabe zugrunde, ein Verfahren zur Umsetzung der eingangs genannten in einem Gasgemisch enthaltenen Verbindungen anzugeben, welches die genannten Nachteile vermeidet.

Diese Aufgabe wird durch ein Verfahren der eingangs genannten Art gelöst, wobei erfindungsgemäß in dem Katalysator Titanoxid als Titandioxid TiO₂ des Rutil-Typs und des Anatas-Typs vorliegt, wobei das Titanoxid eine BET-Oberfläche größer als 40m²/g aufweist, wobei der Anteil an Titandioxid TiO₂ des Rutil-Typs mehr als 50 Gew.%, bezogen auf das Gesamtgewicht des Titanoxids, beträgt, und wobei die mindestens eine Verbindung zu umweltrerträglichen Stoffen sowie gegebenen Falls saure Reationsprodukte umgewandelt wird.

Durch die Verwendung von Titandioxid in der Rutil-Modifikation als Katalysatorgrundstoff wird eine besonders gute Säurebeständigkeit des Katalysators erzielt, die die Säurebeständigkeit eines Katalysators mit Titandioxid in der Anatas-Modifikation als Katalysatorgrundstoff übertrifft. Durch die Verwendung von Titandioxid des Rutil-Typs, welches im Vergleich zu Titandioxid des Anatas-Typs bei hohen Temperaturen keinem oder nur sehr geringem Kornwachstum unterliegt, wird auch eine besonders hohe Temperaturstabilität erzielt. Die Temperaturstabilität ist bedingt durch die Tatsache, daß Titandioxid des Rutil-Typs selbst bei Temperaturspitzen im Bereich von 700 bis 1000 °C so gut wie kein Korngrößenwachstum zeigt, welches zu einer Abnahme der spezifischen Oberfläche führen würde, wie dies bei Titandioxid vom Anatas-Typ der Fall ist. Die Verwendung von Titandioxid des Rutil-Typs ist um so bemerkenswerter, weil ein Fachmann herkömmlicherweise die Verwendung von Titandioxid des Rutil-Typs ausschließt, da Titandioxid in der Rutil-Modifikation üblicherweise nur für die Herstellung von Weißpigmenten verwendet wird und daher in der Regel nur mit einer relativ geringen spezifischen Oberfläche von etwa 10 m²/g erhältlich ist. Dagegen ist Titandioxid des Anatas-Typs auch mit einer relativ hohen spezifischen Oberfläche von 100 m²/g im Handel verfügbar.

Mit Bezug auf die Temperaturstabilität ist es besonders vorteilhaft,. wenn der Anteil an Titandioxid TiO₂ des Anatas-Typs kleiner 25 Gew.-% ist, bezogen auf das Gesamtgewicht des eingesetzten Titandioxids.

Die katalytische Aktivität des Katalysators wird besonders groß, wenn als katalytisch aktive Komponente eine Verbindung oder mehrere Verbindungen der Elemente Molybdän, Wolfram, Vanadium, Kupfer, Eisen, Chrom und Mangan vorgesehen ist bzw. sind. Hierbei eignen sich besonders Kupfer-Mangan-Spinelle, Kupferchromite, Chromoxide und Manganchromite.

Aus Kostengründen und aufgrund technischer Gegebenheiten sollte der Katalysator nicht einen beliebig hohen Anteil der katalytisch aktiven Komponente beinhalten. Es ist vorteilhaft, wenn der Anteil der katalytisch aktiven Komponente 20 Gew.-% nicht übersteigt und vorzugsweise zwischen 2 und 10 Gew.-% liegt.

Der Katalysator ist besonders praktisch zu handhaben, wenn er in Wabenform oder in Pellet- und/oder Granulatform vorliegt.

Die Herstellung des erfindungsgemäß eingesetzten Katalysators kann prinzipiell nach dem eingangs erwähnten Verfahren unter denselben Bedingungen erfolgen, die auch zur Herstellung eines aus dem Stand der Technik bekannten Katalysators zur Entfernung von organischen Verbindungen aus Abgasen üblich sind.

Titandioxid geht allmählich und bei Temperaturerhöhung beschleunigt irreversibel von der Anatas-Modifikation in die Rutil-Modifikation über. Bei einer Temperaturerhöhung findet allerdings keine Veränderung der Korngröße des Rutils statt. Daher kann davon ausgegangen werden, daß der Katalysator das gleiche oder ein höheres Verhältnis von Titandioxid in der Rutil-Modifikation zu Titandioxid in der Anatas-Modifikation aufweist wie das eingangs zugefügte Ausgangsmaterial.

Titandioxid in der Rutil-Modifikation mit einer BET-Oberfläche größer als 40 m²/g kann nach weitgehend denselben Verfahren hergestellt werden, welche für das für Weißpigmente gefertigte Rutil mit einer BET-Oberfläche von etwa 10 m²/g bekannt ist. Derartige Verfahren sind z.B. Fällung aus Titanylsulfat oder oxidische Verbrennung von Titantetrachlorid. Es muß gegebenenfalls die Kristallisationsgeschwindigkeit entsprechend geändert werden, um geeignete Korngrößen zu erzielen.

Ausführungsbeispiele der Erfindung werden anhand einer Zeichnung näher erläutert. Dabei zeigen:
- FIG 1: in schematischer Darstellung eine Abluftleitung mit einem Katalysator zur Umsetzung von organischen Verbindungen; und
- FIG 2: in schematischer Darstellung mögliche Ausführungsformen des in Figur 1 verwendeten Katalysators.

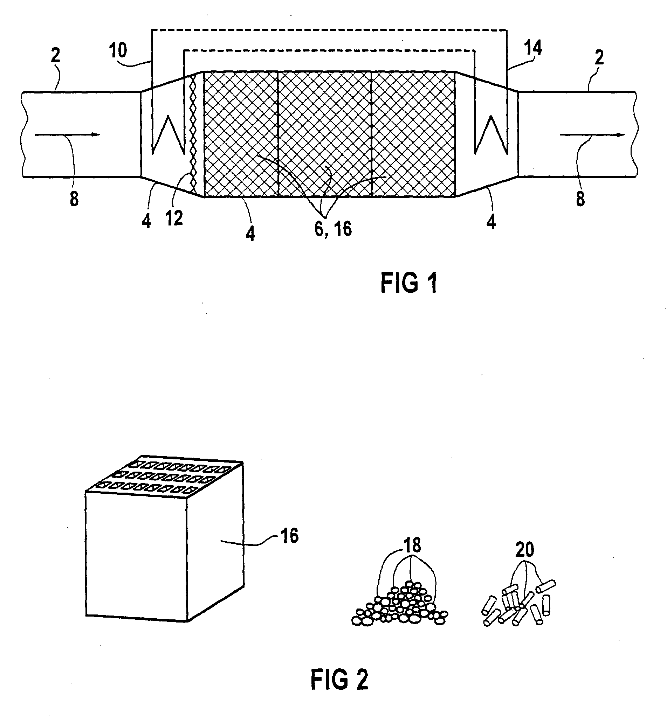

Die in Figur 1 dargestellte Abluftleitung 2 einer hier nicht weiter dargestellten Industrieanlage weist im Bereich einer Aufweitung 4 einen eingesetzten Katalysator 6 auf. In der Aufweitung 4 sind in Strömungsrichtung der Abluft 8 vor dem Katalysator 6 ein Wärmetauscher 10 und ein Mischeinsatz 12 vorgesehen. In Strömungsrichtung der Abluft 8 nach dem Katalysator 6 ist im Bereich der Aufweitung 4 ein weiterer Wärmetauscher 14 vorgesehen, der mit dem Wärmetauscher 10 als Rekuperativ-Wärmetauscher ausgestaltet sein kann, wie dies durch die gestrichelten Linien angedeutet ist. Beim Umsatz von halogenierten Kohlenwasserstoffen, insbesondere von bei der Müllverbrennung entstehenden Dioxinen und Furanen, kann zusätzlich ein hier nicht dargestellter Abscheider für saure Reaktionsprodukte, wie z.B. HCl, HF, erforderlich sein.

Die in der Abluftleitung 2 strömende Abluft 8 ist mit organischen Verbindungen belastet. Die Abluft weist vor Eintritt in die Aufweitung 4 eine Temperatur von etwa 20 °C, eine ansonsten übliche Luftzusammensetzung und einen Volumenstrom von etwa 10.000 Nm³/h auf.

Der Katalysator 6 besteht im Ausführungsbeispiel aus keramischen Wabenkörpern 16, wie ein solcher in Figur 2 dargestellt ist. Ein solcher Wabenkörper 16 weist üblicherweise eine Zellenanzahl von 4 bis 78 Zellen/cm² (entspricht 25 bis 500 Zellen/inch²) auf. Der Wabenkörper 16 besteht im Ausführungsbeispiel aus etwa 90 Gew.-% Titandioxid, wobei das Titandioxid zu etwa 95 Gew.-% aus dem Rutil-Typ und zu etwa 5 % aus dem Anatas-Typ besteht. Der Wabenkörper 16 enthält weiter etwa 3 Gew.-% Fasermaterial, z.B.

Glasfasern oder Fasern aus Aluminiumoxid und/oder Siliciumoxid, zur Erhöhung der mechanischen Festigkeit.

Die verbleibenden sieben Gew.-% des Katalysators 6 stellen im wesentlichen die katalytisch aktiven Substanzen des Katalysators 6 dar. Diese sind zwei Gew.-% Eisenoxid Fe₂O₃, zwei Gew.-% Vanadiumpendoxid V₂O₅ sowie jeweils ein Gew.-% Spinelle der Systeme Kupfer-Mangan, Kupfer-Chrom und Mangan-Chrom mit dem zugehörigen Summenformeln CuMn₂O₄, CuCr₂O₄ und MnCr₂O₄.

Die Abluft 8 wird mittels des Wärmetauschers 10 auf etwa 200 °C aufgeheizt. Mittels des zum Wärmetauscher 10 stromabwärts gelegenen Mischeinsatzes 12 wird die Abluft 8 gemischt mit dem Ergebnis, daß eine homogene Verteilung der Temperatur der Abluft 8 über den gesamten Querschnitt der Aufweitung 4 vorliegt. Durch die Kontaktierung der vorstehend genannten organischen Verbindungen mit dem Katalysator 6 werden diese Verbindungen zu weitgehend umweltverträglichen Stoffen, z. B. Kohlendioxid und Wasser, umgewandelt.

Die aus dem Katalysator 6 austretende Abluft ist bei entsprechender Dimensionierung des Katalysators 6 frei von schädlichen organischen Verbindungen. Dazu sollte das Volumen des Katalysators 6 derart gewählt sein, daß der in einer Stunde durch ihn geführte Volumenstrom der Abluft 8 sein Volumen nicht um einen Faktor 50.000 überschreitet, d.h. ein Maximum von 50.000 pro Stunde für die Abluftraumgeschwindigkeit. Die Abluftraumgeschwindigkeit sollte vorzugsweise zwischen 500 und 10.000 pro Stunde liegen.

Mittels des Wärmetauschers 14 wird der Abluft 8 die zuvor mittels des Wärmetauschers 10 zugeführte Wärme wieder entzogen. Diese Wärme kann dem Wärmetauscher 10 wieder zugeführt werden. Alternativ kann die Abluftleitung 2 nach dem Austritt aus dem Katalysator 6 über den Wärmetauscher 10 geführt werden, wenn dieser als Rekuperativ-Wärmetauscher ausgestaltet ist.

Bedingt durch die Wahl von Titandioxid des Rutil-Typs mit einer spezifischen Oberfläche, auch BET-Oberflache genannt, größer 80 m²/g, erreicht der Katalysator 6 eine besonders hohe Säurebeständigkeit, Temperaturstabilität und katalytische Aktivität. Dabei wird die Säurestabilität durch die Verwendung von Titandioxid des Rutil-Typs weiter erhöht; die Temperaturstabilität wird durch den hohen Anteil an Titandioxid des Rutil-Typs erreicht. Die hohe katalytische Aktivität wird einerseits durch die Wahl der BET-Oberfläche größer 40 m²/g und andererseits durch die Wahl der katalytisch aktiven Komponenten erzielt.

In Figur 2 sind neben dem Wabenkatalysator 16 alternative Katalysatorformkörper 18 und 20 dargestellt. Diese sind Katalysatorgranulat 18 und Katalysatorpellets 20. Das Katalysatorgranulat 18 kann beispielsweise aus Kügelchen mit einem Durchmesser von etwa 1 bis 5 mm bestehen. Die Pellets 20 haben üblicherweise einen Durchmesser von etwa 1 bis 5 mm und eine Länge von etwa 5 bis 30 mm.

## Patentansprüche

1. Verfahren zur Umsetzung von mindestens einer in einem Gasgemisch (8) enthaltenen Verbindung aus der Gruppe, welche besteht aus Kohlenmonoxid sowie halogenierter Kohlenwasserstoffen, wobei das Gasgemisch (8) über einem Katalysator (6,16,18,20) geleitet wird, welcher Katalysator (6,16,18,20) Titanoxid, Vanadiumpentoxid und mindestens eine weitere katalytisch aktive Komponente umfasst,
**dadurch gekennzeichnet,** daß das Titanoxid als Titandioxid TiO₂ des Rutil-Typs und des Anatas-Typs vorliegt, wobei das Titanoxid eine BET-Oberfläche größer als. 40m²/g aufweist, daß der Anteil an Titandioxid TiO₂ des Rutil-Typs mehr als 50 Gew.%, bezogen auf das Gesamtgewicht des Titanoxids, beträgt, und daß die mindestens eine Verbindung zu umweltrerträglichen Stoffen, ungenandelt wird.

2. VerFahren nach Anspruch 1, sowie ggF. saure Reaktionsprodukte
**dadurch gekennzeichnet,** daß der Anteil an Titandioxid TiO₂ des Anatas-Typs kleiner 25 Gew.-% ist, bezogen auf das Gesamtgewicht des eingesetzten Titanoxids.

3. Verfahren nach Anspruch 1 oder 2,
**dadurch gekennzeichnet,** daß als weitere katalytisch aktive Komponente zumindest eine Verbindung der Elemente Molybdän, Wolfram, Vanadium, Kupfer, Eisen, Chrom und Mangan vorgesehen ist.

4. Verfahren nach Anspruch 3,
**dadurch gekennzeichnet,** daß als weitere katalytisch aktive Komponente zumindest eine Verbindung aus der Gruppe bestehend aus Kupfer-Mangan-Spinelle, Kupferchromite, Chromoxide und Manganchromite ist.

5. Verfahren nach einem der Ansprüche 1 bis 4, **dadurch gekennzeichnet,** daß der Anteil der katalytisch aktiven Komponente 20 Gew.-% nicht übersteigt und vorzugsweise zwischen 2 und 10 Gew.-% liegt.

6. Verfahren nach einem der Ansprüche 1 bis 5, **gekennzeichnet durch** eine Wabenform.

7. Verfahren nach einem der Ansprüche 1 bis 5, **gekennzeichnet durch** eine Pelletform (20) oder Granulatform (18).

## Claims

1. Process for reacting at least one compound that is contained in a gas mixture (8) and that is composed the group comprising carbon monoxide and also halogenated hydrocarbons, wherein the gas mixture (8) is passed over a catalyst (6, 16, 18, 20), which catalyst (6, 16, 18, 20) comprises titanium oxide, vanadium pentoxide and at least one further catalytically active component, characterized in that the titanium oxide is present in the form of titanium dioxide TiO₂ of the rutile type and of the anatase type, wherein the titanium dioxide has a BET surface area of greater than 40 m²/g, in that the proportion of titanium dioxide TiO₂ of the rutile type is more than 50% by wt, relative to the total weight of the titanium oxide, and in that the at least one compound is converted to environmentally acceptable substances and also possibly acid reaction products are converted.

2. Process according to Claim 1, characterized in that the proportion of titanium dioxide TiO₂ of the anatase type is less than 25% by wt, relative to the total weight of titanium oxide used.

3. Process according to Claim 1 or 2, characterized in that at least one compound of the elements molybdenum, tungsten, vanadium, copper, iron, chromium and manganese is provided as further catalytically active component.

4. Process according to Claim 3, characterized in that at least one compound from the group comprising coppermanganese spinels, copper chromites, chromium oxide and manganese chromites is provided as further catalytically active component.

5. Process according to one of Claims 1 to 4, characterized in that the proportion of the catalytically active component does not exceed 20% by wt and is preferably between 2 and 10% by wt.

6. Process according to one of Claims 1 to 5, characterized by a honeycomb form.

7. Process according to one of Claims 1 to 5, characterized by a pellet form (20) or granular form (18).

## Revendications

1. Procédé de conversion d'au moins un composé (2) contenu dans un mélange (8) gazeux, sélectionné dans le groupe constitué du monoxyde de carbone ainsi que d'hydrocarbures halogénés, qui consiste à envoyer le mélange gazeux sur un catalyseur (6, 16, 18, 20), lequel catalyseur (6, 16, 18, 20) comprend de l'oxyde de titane, du pentoxyde de vanadium et au moins un autre constituant actif catalytiquement,
caractérisé en ce que l'oxyde de titane se présente sous la forme du dioxyde de titane TiO₂ du type rutile ou du type anatase, l'oxyde de titane ayant une surface BET supérieure à 40 m²/g, en ce que la proportion de dioxyde de titane TiO₂ du type rutile représente plus de 50 % du poids total de l'oxyde de titane et en ce que au moins un composé est transformé en substances compatibles avec l'environnement, ainsi que le cas échéant en des produits de réaction acides.

2. Procédé suivant la revendication 1, caractérisé en ce que proportion de dioxyde de titane TiO₂ du type anatase est inférieure à 25 % en poids, rapporté au poids total de l'oxyde de titane utilisé.

3. Procédé suivant la revendication 1 ou 2, caractérisé en ce qu'il est prévu comme autre constituant actif catalytiquement au moins un composé des éléments molybdène, tungstène, vanadium, cuivre, fer, chrome et manganèse.

4. Procédé suivant la revendication 3, caractérisé en ce qu'il est prévu comme autre constituant actif catalytiquement au moins un composé sélectionné dans le groupe constitué de spinelles de cuivre et de manganèse, de chromite de cuivre, d'oxyde de chrome et de chromite de manganèse.

5. Procédé suivant l'une des revendications 1 à 4, caractérisé en ce que la proportion du constituant actif catalytiquement ne dépasse pas 20 % en poids et de préférence est comprise entre 2 et 10 % en poids.

6. Procédé suivant l'une des revendications 1 à 5, caractérisé par une forme en nid-d'abeilles du catalyseur.

7. Procédé suivant l'une des revendications 1 à 5, caractérisé par une forme (20) en pastilles ou par une forme (18) en granulés du catalyseur.
